# EUROPEAN PATENT SPECIFICATION

(11) **EP 0 647 077 B1**
(45) Date of publication and mention of the grant of the patent: **21.11.2001**
(21) Application number: 94307097.9
(22) Date of filing: 28.09.1994
(51) Int. Cl.: H04Q 7/24

(54) **Method for controlling a mobile integrated voice and data (IVD) system having a plurality of personal station (PS'S)**
Verfahren zur Steuerung eines sprach- und datenintegrierten Mobilsystems mit einer Vielzahl von persönlichen Stationen
Méthode pour la commande d'un système mobile intégrant la voix et les données avec une pluralité de stations personnelles

(30) Priority: 30.09.1993 JP 24458093
(43) Date of publication of application: 05.04.1995
(73) Proprietor: International Business Machines Corporation, Armonk, N.Y. 10504 (US)
(72) Inventor: Kanada, Yoshihisa, Itabashi-ku, Tokyo-to (JP); Terashita, Yoshihiko, Yamato-shi, Kanagawa-ken (JP); Kasuya, Masaaki, Taito-ku, Tokyo-to (JP); Katoh, Yukari, Sagamihara-shi, Kanagawa-ken (JP)
(74) Representative: Davies, Simon Robert

(56) References cited:
- EP-A- 0 283 683
- EP-A- 0 479 477
- WO-A-93/11625
- WO-A-93/18606
- US-A- 5 157 660

## Description

### Field of the Invention

The present invention relates to a local area network (LAN) and communication network. More specifically, the invention relates to a method for controlling communication in a mobile Integrated Voice and Data (IVD) system, the system having a plurality of Cell Stations (CS's) interconnected through communication networks including a LAN and a PBX telephone network and Personal Stations (PS's) movable among a plurality of radio cells, the CS having a particular radio cell which defines a territory being capable of communicating via a radio link. In particular, the invention relates to a "method for controlling communication of the mobile IVD system having a plurality of PS's", the method enabling the sending of calls to PS's and also enabling automatic re-connection of link even when the PS moves between radio cells during telephone calls and the link is disconnected.

### Background of the Invention

A PBX system is conventionally known which comprises a plurality of PBX telephones interconnected with specifically used communication wires the inside of buildings, schools, and enterprises (or offices in enterprises). In addition, a recent development of radio technology has been promoting the development of mobile IVD systems in which the PBX telephone service is based on a physically separated form of CS's and PS's that can communicate via radio. The system allows users (subscribers) to actually exchange information with PS's to one another while the CS controls the communication link among the PS's.

The territory in which CS's are capable of communicating with PS's is restricted to a predetermined area centering on the CS's owing to the attenuation of radio waves resulting from the surrounding environment (a territory in which PS's are communicating with each other is generally called a radio cell). Then CS's normally accommodate within their own radio cells one or more PS's so that assigning PBX telephone numbers of private links to each of the PS's allows to communicate between the PS's. On the other hand, PS's are not mechanically constrained and may move freely between a plurality of radio cells in accordance with the intention of users. In addition, when mobile IVD systems are not capable of sending and receiving some information to or from PS's via CS's, the significance of the mobile IVD system will be decreased.

However, a conventional mobile IVD system must be substituted to a PBX added with the following functions so that the system is to be connected with a new link so as to constantly enable reception of information with respect to PS's moving among a plurality of radio cells.
(a) a function for sending call signals to mobile terminals from all the CS's.
(b) a function for selecting the optimal CS to connect a link by a response from the PS to call signals.
   In addition, conventional mobile IVD systems require substitution to a PBX added with the following functions to automatically switch over the communication circuit in order that the continuation of conversation be guaranteed to PS's moving between radio cells during communication.
(c) a function for monitoring the receiving level of electromagnetic waves from PS's and selecting the optimal CS's.
(d) a function for disconnecting the communication circuit whose receiving level has weakened in synchronization with the PS's.

However, substituting a PBX equipped with the above construction (a) to (d) for all the PBX telephone links in the mobile IVD system imposes a considerable cost burden as far as the users of the system are concerned. Furthermore, conventional PBX systems prevent users from enjoying the benefit of radio communication.

In this connection, the concept of the second generation cordless telephone, which is referred to as digital cordless telephones, or PHP's (personal handy phones) has recently been formulated. PHP's allow the simultaneous handling of communication by means of both voice and data signals through the digitalization of voice and data signals. Technological specifications for the interface between general-purpose radio segments has been standardized on the part of RCR (R & D Center for Radio Systems) between the PHP terminal and CS. PHP can simultaneously handle both voice and data with the digitization thereof via the interface between radio segments.

The second generation cordless telephone system satisfies the following items as basic functions.
(a) Digitalization of system
   The quality of cordless telephone system shall be able to be secured to a level more than equal to the counterpart conventional analog type cordless telephone system, the secrecy of conversation on the phone can be improved and the frequency bandwidth can be effectively used.
(b) Interconnection
   PS's shall be capable of basic connection with CS's at various places such as offices, homes, and outdoor areas.
   In addition, when there arises a situation in which PS's already used for homes and offices must be connected to outdoor public CS's, PS can be easily shared through the execution of necessary measures.
(c) Connection with communication network
   The second generation cordless telephone system shall be able to be connected with the established analog telephone network and ISDN digital network.
(d) In addition to service that has been used in conventional cordless telephone systems, various services can be utilized through the services provided by ISDN.

Portable wireless communication systems are described in patent No. EP-A-0283683. However, dedicated communication lines are provided for data exchange, thus, communication cannot occur via a LAN.

### Summary of the Invention

Therefore, an object of the present invention is to provide a "method for controlling a mobile IVD system having a plurality of PS's" that enables moving PS's to receive signals by introducing PHP terminals within the mobile IVD system comprising available PBX and LAN so as to provide communication with integrated voice and data.

In addition, another object of the invention is to provide a "method for controlling a mobile IVD system having a plurality of PS's" that automatically reconnects a communication link upon a PS's moving between radio cells so that the link is disconnected, by introducing of PHP terminals into the mobile IVD system comprising available PBX and LAN so as to perform communication with integrated voice and data.

The present invention has been made in view of the above points to provide a method for controlling a mobile Integrated Voice and Data (IVD) system, said system having a plurality of Cell Stations (CS's) interconnected through PBX telephone networks and a plurality of Personal Stations (PS's) movable among a plurality of radio cells, said PS's being capable of communicating with a CS which manages the PS's through radio links, each of said CS's managing a plurality of PBX telephone numbers, having a particular radio cell which defines a territory being capable of communicating through radio links, and assigning one of said PBX telephone numbers to each of them respectively, characterised in that the system has a plurality of Cell Stations (CS's) interconnected through a LAN, each of said PS's having a particular LAN identifier, and registering the LAN identifiers of said plurality of PS's which are in its territory, and in that said method comprises the step of :
(a) in response to a first PS moving into a territory of a first CS, registering said first PS's LAN identifier and assigning a PBX number to said first PS by said first CS;
(b) sending calling information including a second PS's LAN identifier and said first PS's newly assigning PBX telephone number to said first PS to said first CS via radio links by said first PS;
(c) broadcasting said calling information from said first CS to all the other CS's via said LAN by said first CS;
(d) in response to a second CS which registers said second PS receiving said calling information, resending it to said second PS via radio links by said second CS;
(e) dialling the PBX telephone numbers stored in said calling information by said second PS; and
(f) calling said first PS via a PBX link in response to dialling step (e) and establishing a PBX telephone link between said first and second PS's.

In addition, the present invention also provides a method for:
(a) establishing a communication link between a first PS within a radio cell of a first CS and a second PS within a radio cell of a second CS;
(b) monitoring the reception levels during transmission and instantly disconnecting said communication link if the first PS moves beyond the radio cell of the first CS and the reception level of radio waves falls to or below said predetermined threshold value,
(c) registering the LAN identifier of the first PS in a third CS, and simultaneously assigning a PBX telephone number to the first PS when the first PS moves to the radio cell of the third CS,
(d) sending moving information including the LAN identifier of the second PS and said newly assigned PBX telephone number from the first PS to the third CS through radio links,
(e) sending said moving information from the third CS to the second CS via the LAN,
(f) sending said moving information from the second CS to the second PS by radio signal,
(g) dialling the PBX telephone number included within said moving information from the second PS, and
(h) calling the first PS in response to said dialling step, and then re-establishing the PBX telephone link between the first PS and the second PS in response to said calling.

In accordance with the present invention, an apparatus for controlling a mobile Integrated Voice and Data (IVD) system is provided, said system having a plurality of Cell Stations (CS's) interconnected through PBX telephone networks and a plurality of Personal Stations (PS's) movable among a plurality of radio cells, said PS's being capable of communicating with a CS which manages the PS's through radio links, each of said CS's managing a plurality of PBX telephone numbers, having a particular radio cell which defines a territory being capable of communicating through radio links, and assigning one of said PBX telephone numbers to each of them respectively, characterised in that the system has a plurality of Cell Stations (CS's) interconnected through a LAN, each of said PS's having a particular LAN identifier, and registering the LAN identifiers of said plurality of PS's which are in its territory, and in that the apparatus comprises:
(a) means for registering a first PS's LAN identifier and assigning a PBX number to said first PS by a first CS, in response to said first PS moving into the territory of said first CS;
(b) means for sending calling information including a second PS's LAN identifier and said first PS's newly assigning PBX telephone number to said first PS to said first CS via radio links by said first PS;
(c) means for broadcasting said calling information from said first CS to all the other CS's via said LAN by said first CS;
(d) means for receiving said calling information, resending it to said second PS via radio links by said second CS, in response to a second CS which registers said second PS;
(e) means for dialling the PBX telephone numbers stored in said calling information by said second PS; and
(f) means for calling said first PS via a PBX link in response to said dialling and for establishing a PBX telephone link between said first and second PS's.

This allows a first PS which is communication demand source to broadcast to all the CS's the LAN identifier (LAN network address) of an addressed second PS and calling information (called packet) including its PBX telephone numbers through LAN via a first CS. Thereafter, a second CS which registers addressed LAN identifier receives and sends the calling information via radio links. Then when the second PS dials the PBX telephone number included in the calling information and the first PS responds to the calling, the communication link between two PS's is maintained.

In this way, signals can be received by all the PS's in the IVD system.

In accordance with a further preferred aspect of the present invention, an apparatus is provided, further comprising:
(a) means for establishing a communication link between a fist PS within a radio cell of a first CS and a second PS within a radio cell of a second CS;
(b) means for monitoring the reception levels during transmission and means for instantly disconnecting said communication link if the first PS moves beyond the radio cell of the first CS and the reception level of radio waves falls to or below said predetermined threshold value,
(c) means for registering the LAN identifier of the first PS in a third CS, and simultaneously assigning a PBX telephone number to the first PS when the first PS moves to the radio cell of the third CS,
(d) means for sending moving information including the LAN identifier of the second PS and said newly assigned PBX telephone number from the first PS to the third CS through radio links,
(e) means for sending said moving information from the third CS to the second CS via the LAN,
(f) means for sending said moving information from the second CS to the second PS by radio signal,
(g) means for dialling the PBX telephone number included within said moving information from the second PS, and
(h) means for calling the first PS in response to said dialling step, and then re-establishing the PBX telephone link between the first PS and the second PS in response to said calling.

Thus, when the first PS that has been moved out of the initial radio cell sends to a second CS by using LAM, a LAN identifier of an addressed second PS and information notifying the movement including newly assigned PBX telephone number, then, the second CS sends the information notifying the movement of the first PS to the second PS by radio. The second PS dials the PBX telephone number included in the information notifying the movement thereof. When the first PS responds to the call, the communication link between two PS's is reconnected.

Therefore, even when the communication link is disconnected along with the movement of one of the PS's, the link can be automatically reconnected.
Figure 1 is a block diagram showing the IVD system provided by the embodiment of the present invention;
Figure 2 is a block diagram showing the construction of the major part of the CS (20) included in the IVD system;
Figure 3 is a block diagram showing the construction of the major part of the PS included in the IVD system;
Figure 4 is a view showing an example of the control table within the radio cell included in the CS (20);
Figure 5 is a view showing an example of a format of calling packet;
Figure 6 is a view showing an example of the format of the movement notification packet;
Figure 7 is a view showing a flowchart for illustrating the reception of signals on the PS that moves between radio cells; and
Figure 8 is a view showing a flowchart for illustrating the automatic reconnection of the link when the link is disconnected by moving between radio cells in communication.

### Detailed Description of the Invention

Embodiments of the present invention will be described in detail hereinafter in conjunction with the drawings.

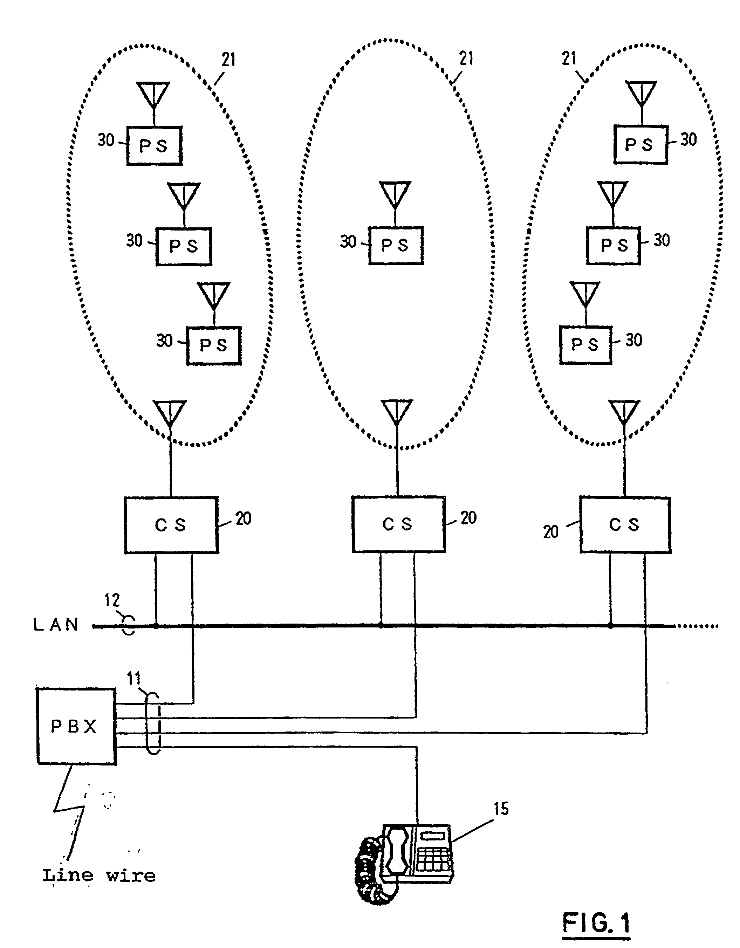

Figure 1 is a block diagram showing the a general construction of an IVD system to which an embodiment of the present invention is applied. The IVD system comprises a network upper layer using PBX telephone network facilities as communication medium and a network lower layer using radio links as a communication medium.

The network upper layer provides a telephone network (11) extended from a PBX, a LAN (12), and one or more cell station (CS) (20) connected to both (11) and (12). Furthermore, for each CS (20), a radio cell, that is an area where radio waves can be received is defined. Then preferably mutual radio cells are normally distributed and arranged in buildings, schools, enterprises (or offices of enterprises), or outdoors.

Furthermore, the network lower layer comprises the above CS (20), and one or more PS (30) which can perform communication with the CS (20) by radio links. The space where each CS (20) can accommodate PS's is limited to their own radio cell (21) owing to the influence of the decay of radio waves.

Incidentally, referring to Figure 1, the connection between PBX telephone network facilities is given as a bus type, but the connection is not limited thereto. It may be of a star type or a loop type.

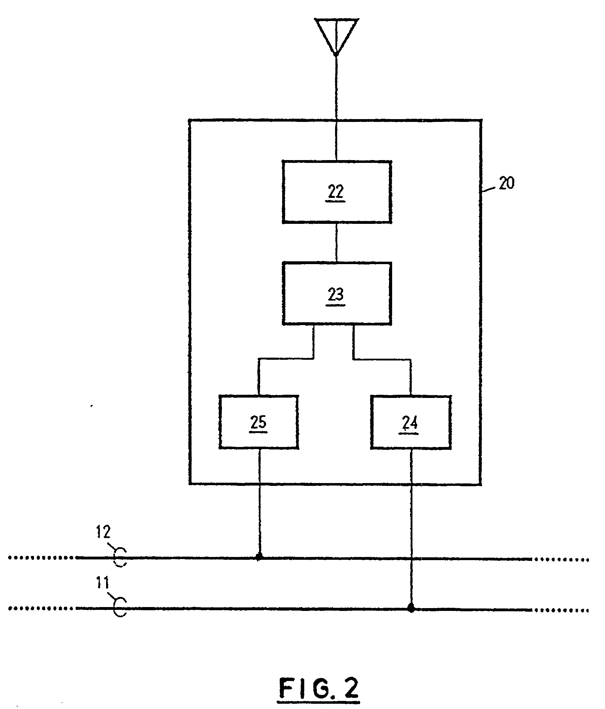

Figure 2 is a block diagram showing the construction of a major portion of the CS (20). The function of each block diagram will be detailed hereinafter.

The block designated by Reference Numeral 22 is a controller for the transmission and reception. The controller has a function of receiving a signal integrating information on the PBX telephone network (11) and (12) in the form of digitalized data to convert the same data into a radio signal as well as a function for receiving the radio signal so as to convert the same signal into digitalized data. Furthermore, the controller (22) can monitor the reception level with PS (30) within the radio link.

The block shown by Reference Numeral 23 is a communication controller having a function for integrating voice and data on a single digitalized data format as well as a function for receiving a signal integrating information on electric communication network (11) and (12) in the form of digitalized data to branch it off into a telephone network (11) (voice) and a LAN (12) (data). Furthermore, the communication controller (23) controls communication between PS's in radio cells of the CS's, communication with CS's other than the CS (20) and communication with the other telephone (15) connected to the telephone network (11). The communication controller (23) disconnects this communication link when the reception level of radio wave from the communicating PS (30) falls to or below the threshold value. Incidentally, the threshold value is set in advance to a value corresponding to the reception level when the PS jumped out of its own radio cell.

The block designated by Reference Numeral 24 is a controller of the telephone network which is connected with the telephone network (11) to control the link connection on the side of the PBX. The PBX preliminarily provides each CS (20) with a plurality of PBX telephone numbers for conversation through the telephone network (11). The telephone network controller (24) responds only to the demand for conversation to connect the link.

The block designated by Reference Numeral 25 is a LAN controller which is connected to the LAN (12) in order to control the link connection on the LAN side. Incidentally, the LAN controller (25) receives a "calling packet" and "movement notification packet" via the LAN from a PS accommodated in an other radio cell.

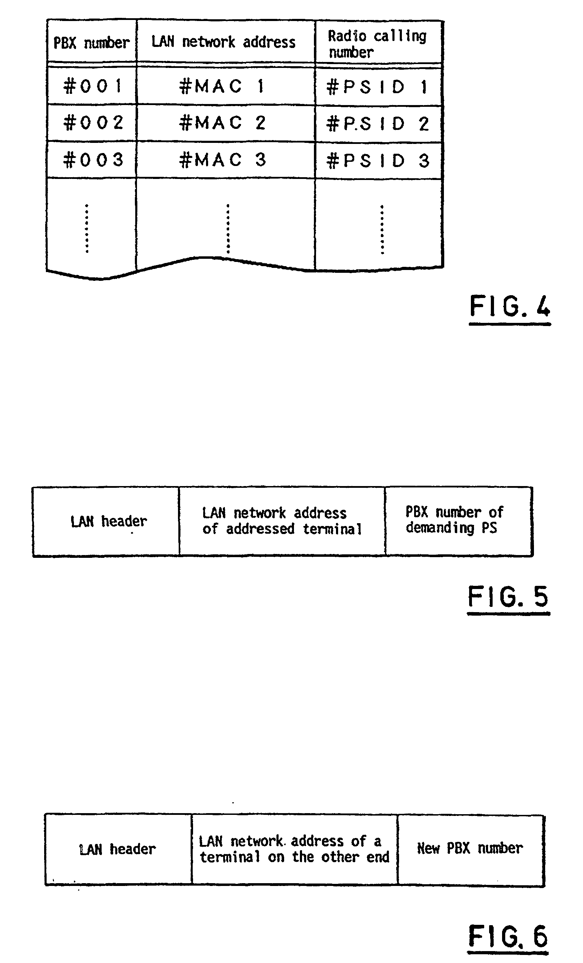

The operation for establishing a radio link between the CS (20) and the PS (30) by accommodating the PS (30) into the CS (20) is actualized with the communication control function provided as a normal standard established by the RCR. Details thereof are omitted here. When the position of a certain PS (30) is registered with regard to a specified CS (20), the LAN network address of a portable terminal (which will be mentioned later) connected to itself is sent. The CS (20) comes to control the LAN network address related with all the PS's (30) accommodated within its own radio cell (21). Moreover, the CS (20) serves to assign one of the PBX telephone numbers possessed in itself to each PS (30). Each CS (20) includes control tables within the radio cell to clearly control such LAN network addresses and PBX telephone numbers. Figure 4 shows one example of a control table within the radio cell. The table clearly shows that the position of each PS (30) provided with a LAN network address, "# MAC1", "# MAC2" and "# MAC3" is registered, PBX telephone numbers "# 001" "# 002" and "# 003" are respectively assigned to each PS, and radio calling numbers "# PSID1", "# PSID2", and "PSID3" are respectively assigned to each PS (30) for communicating with the CS (20).

Furthermore, each CS (20) is provided with LAN network address for identifying individual calls within a wide area LAN.

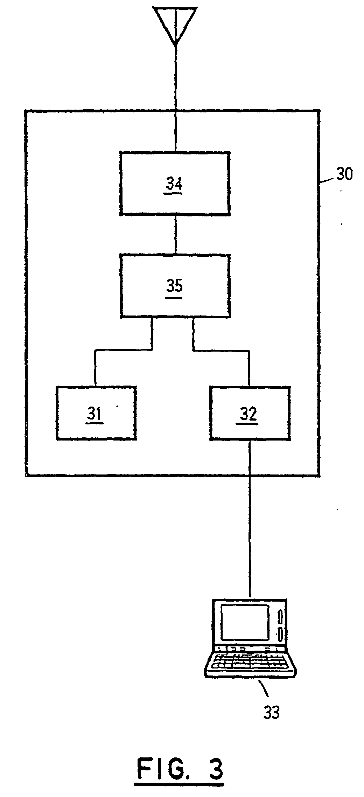

Figure 3 is a block diagram showing the construction of the major part of the PS (30). The function of each block will be detailed hereinbelow.

The block designated by Reference Numeral 31 is a handset providing a conversation function mutually converting voice and symbols so as to enable users (subscribers) to talk on the phone, and a dialling function for designating the telephone number of the person on the other end of the phone. The telephone can have the same construction as a subsidiary device of the conventional cordless telephone.

The block designated by Reference Numeral 32 is a data communication port. The PS (30) is connected with a portable terminal (33) via the data communication port (32) to be provided as a communication terminal apparatus to subscribers. A personal computer is used as the portable terminal (33). Users can enter communication data through the keyboard. In addition, each portable terminal (33) is provided with a LAN network address for identifying individual calls within a wide area LAN.

The block designated by Reference Numeral 34 is a controller for the transmission and reception. The controller provides a function of receiving digitalized data integrating voice and data to convert the data into the a radio wave signal and a function of receiving radio wave signals so as to convert the data into digitalized data.

The block designated by Reference Numeral 35 is a communication controller which integrates voice signal sent from the handset (31) with a signal from a data communication port (32) in order to send it to the controller (34) as well as dividing a signal sent from the controller (34) into voice and data. The communication controller (35) provides a position registration function for establishing a radio link with a specific CS (20). Since the position registration function is incorporated as a normal standard, it is not shown here. However, it is to be noted that the LAN network address of the portable terminal connected to the PS (30) is notified to the CS (20) in which the PS (30) is accommodated at the position registration.

Next, the operation of the IVD system will be detailed here.

### A. Receiving signals at moving PS

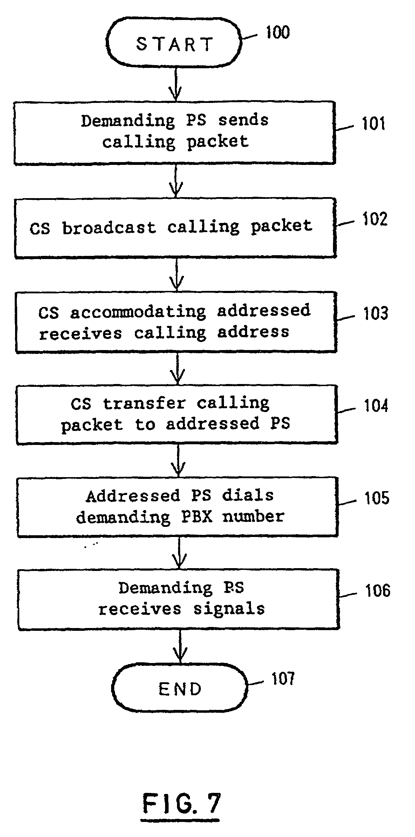

At the outset, the operation of receiving signals at the PS movable between radio cells will be detailed in conjunction with a flowchart shown in Figure 7.

The operation is initiated at step designated by Reference Numeral 100.

At step 101, the PS (30) which is the source of the call demand, sends the calling packet via radio link to the CS (20) accommodating the demanding PS. The calling packet includes a LAN network address assigned to the addressed portable terminal and respective fields for storing the PBX telephone number assigned to the demanding PS (30) after a LAN header shown in Figure 5.

Then, at step 102, the CS (20), which is the source of the demand, broadcasts this calling packet to other CS's (20').

The CS (20') accommodating addressed PS (30') refers to the control table within its own radio cell and LAN network address field in the calling packet (step 103) in order to transfer this calling packet to the addressed PS (30') via radio (step 104).

At step 105, the addressed PS (30') takes out the PBX telephone number of the demand so as to dial the number.

At step 106, the PS (30), which is the source of the demand, responds to calls to complete the connection of telephone network between both PS's.

Therefore, operations corresponding to steps 102 and 105 are automatically performed within the IVD system. Consequently, the demanding subscriber himself can make a PBX telephone call without recognizing in which CS the addressed subscriber is accommodated.

Reconnection upon the communicating PS being moved and the link being disconnected

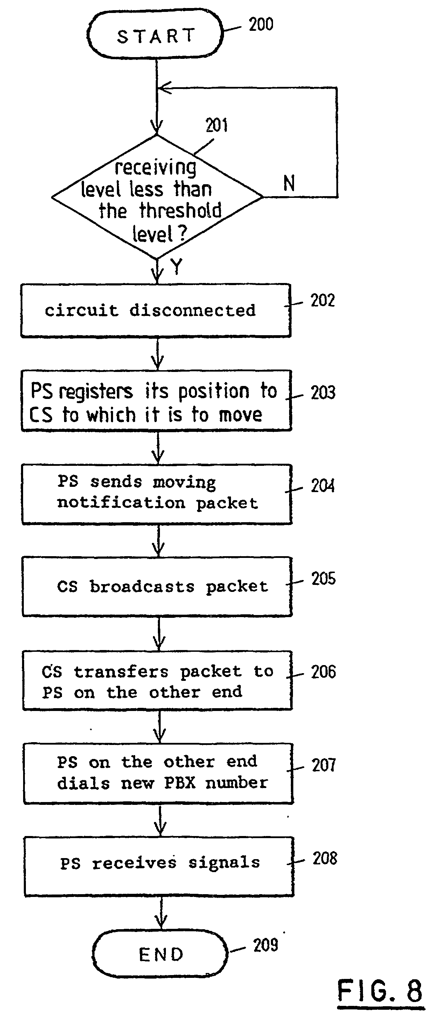

Then operation for automatically reconnecting the telephone network upon the PS being moved between the radio cells and the link being disconnected will be explained with respect to the flowchart shown in Figure 8.

The operation will be initiated from step designated by Reference Numeral 200. Suppose that the PS (30) accommodated in the CS (20) and the PS (30") accommodated in the CS (20") are in the process of communication.

The CS (20) monitors the reception level of the radio wave with the PS during communication. In the determining block designated by Reference Numeral 201, the communication controller (23) within the CS (20) determines whether the reception level is less than the threshold value or not. When the PS (30) jumps out of the area of the radio cell(21) and falls below the threshold value, the link is disconnected at step 202.

The PS (30) then moves into other radio cell (21'). At step 203, the PS (30) demands a new position registration to the CS (20'), thereby establishing a radio link between the CS (20') and the PS (30'). The CS (20'), in turn, assigns a new PBX telephone number to the PS (30).

When the position of PHP is registered, PHP's radio calling symbol is also sent to the CS (20'). The PS (30') senses from the change in the radio calling symbol that it has moved between radio cell (21) and (21'). Then at step 204, a movement notification packet is sent. The movement notification packet, whose format is shown in Figure 6, includes a LAN network address assigned to the portable terminal on the other side of the telephone and respective field for storing PBX number newly assigned to the PS (30) after a LAN header.

At step 205, the CS (20') receives the movement notification packet and sends the packet to other CS (20).

At step 206, the CS (20") receives movement notification packet to send it to other PS (30") via radio link.

At step 207, the PS (30") takes out a new PBX telephone number of the PS (30) from the movement notification packet and dials it.

At step 208, the telephone network is reconnected between the two PS (30) and (30") by responding to a call thereby reconnecting the telephone network.

Therefore, the operation corresponding to steps 201 and 207 is automatically performed within the IVD system. Consequently, subscribers are movable freely within the system without being aware of whether or not the subscribers themselves have moved.

The present invention has been detailed by referring to a specific embodiment illustrated herein. However, the present invention is not limited thereto. Modifications and changes falling within the scope of the appended claims can be easily made by those skilled in the art.

As detailed above, the present invention can provide a "method for controlling the IVD system having a plurality of PS's" for connecting a plurality of PS's, that enables some movable PS's within an IVD system that integrates voice and data, and are constituted by the existing PBX and LAN to receive signals.

The present invention also provides a "method for controlling an IVD system having a plurality of PS's" for automatically reconnecting the communication link when the PS moves between the radio cells and the link is disconnected within the IVD system which integrates voice and data, and are constituted of the available PBX and LAN.

In other words, the present invention can enjoy the largest benefit from the system at the minimum cost, thus yielding the greatest industrial effect.

## Claims

1. A method for controlling a mobile Integrated Voice and Data (IVD) system,
said system having a plurality of Cell Stations (CS's) interconnected through PBX telephone networks and a plurality of Personal Stations (PS's) movable among a plurality of radio cells,
said PS's being capable of communicating with a CS which manages the PS's through radio links,
each of said CS's managing a plurality of PBX telephone numbers, having a particular radio cell which defines a territory being capable of communicating through radio links, and assigning one of said PBX telephone numbers to each of the PS's respectively,
**characterised in that** the system has:
a plurality of Cell Stations (CS's) interconnected through a LAN,
each of said PS's having a particular LAN identifier, and
registering the LAN identifiers of said plurality of PS's which are in its territory,
and **in that** said method comprises the step of:
(a) in response to a first PS moving into a territory of a first CS, registering said first PS's LAN identifier and assigning a PBX number to said first PS by said first CS;
(b) sending calling information including a second PS's LAN identifier and said first PS's newly assigning PBX telephone number to said first PS to said first CS via radio links by said first PS;
(c) broadcasting said calling information from said first CS to all the other CS's via said LAN by said first CS;
(d) in response to a second CS which registers said second PS receiving said calling information, resending it to said second PS via radio links by said second CS;
(e) dialling the PBX telephone numbers stored in said calling information by said second PS; and
(f) calling said first PS via a PBX link in response to dialling step (e) and establishing a PBX telephone link between said first and second PS's.

2. A method as claimed in claim 1, said method further comprising the step of:
(a) establishing a communication link between a first PS within a radio cell of a first CS and a second PS within a radio cell of a second CS;
(b) monitoring the reception levels during transmission and instantly disconnecting said communication link if the first PS moves beyond the radio cell of the first CS and the reception level of radio waves falls to or below said predetermined threshold value,
(c) registering the LAN identifier of the first PS in a third CS, and simultaneously assigning a PBX telephone number to the first PS when the first PS moves to the radio cell of the third CS,
(d) sending moving information including the LAN identifier of the second PS and said newly assigned PBX telephone number from the first PS to the third CS through radio links,
(e) sending said moving information from the third CS to the second CS via the LAN,
(f) sending said moving information from the second CS to the second PS by radio signal,
(g) dialling the PBX telephone number included within said moving information from the second PS, and
(h) calling the first PS in response to said dialling step, and then re-establishing the PBX telephone link between the first PS and the second PS in response to said calling.

3. An apparatus for controlling a mobile Integrated Voice and Data (IVD) system,
said system having a plurality of Cell Stations (CS's) interconnected through PBX telephone networks and a plurality of Personal Stations (PS's) movable among a plurality of radio cells,
said PS's being capable of communicating with a CS which manages the PS's through radio links,
each of said CS's managing a plurality of PBX telephone numbers, having a particular radio cell which defines a territory being capable of communicating through radio, links, and assigning one of said PBX telephone numbers to each of the PS's respectively,
**characterised in that** the system has:
a plurality of Cell Stations (CS's) interconnected through a LAN,
each of said PS's having a particular LAN identifier, and
registering the LAN identifiers of said plurality of PS's which are in its territory,
and **in that** said apparatus comprises:
(a) means for registering a first PS's LAN identifier and assigning a PBX number to said first PS by a first CS, in response to said first PS moving into the territory of said first CS;
(b) means for sending calling information including a second PS's LAN identifier and said first PS's newly assigning PBX telephone number to said first PS to said first CS via radio links by said first PS;
(c) means for broadcasting said calling information from said first CS to all the other CS's via said LAN by said first CS;
(d) means for receiving said calling information, resending it to said second PS via radio links by said second CS, in response to a second CS which registers said second PS;
(e) means for dialling the PBX telephone numbers stored in said calling information by said second PS; and
(f) means for calling said first PS via a PBX link in response to said dialling and for establishing a PBX telephone link between said first and second PS's.

4. An apparatus as claimed in claim 3, said apparatus further comprising:
(a) means for establishing a communication link between a fist PS within a radio cell of a first CS and a second PS within a radio cell of a second CS;
(b) means for monitoring the reception levels during transmission and means for instantly disconnecting said communication link if the first PS moves beyond the radio cell of the first CS and the reception level of radio waves falls to or below said predetermined threshold value,
(c) means for registering the LAN identifier of the first PS in a third CS, and simultaneously assigning a PBX telephone number to the first PS when the first PS moves to the radio cell of the third CS,
(d) means for sending moving information including the LAN identifier of the second PS and said newly assigned PBX telephone number from the first PS to the third CS through radio links,
(e) means for sending said moving information from the third CS to the second CS via the LAN,
(f) means for sending said moving information from the second CS to the second PS by radio signal,
(g) means for dialling the PBX telephone number included within said moving information from the second PS, and
(h) means for calling the first PS in response to said dialling step, and then re-establishing the PBX telephone link between the first PS and the second PS in response to said calling.

## Patentansprüche

1. Verfahren zur Steuerung eines Sprache und Daten integrierenden Mobilsystems,
wobei das genannte System eine Vielzahl von Zellstationen (ZSen), die über Nebenstellen-Telefonnetze miteinander verbunden sind, und eine Vielzahl von persönlichen Stationen (PSen) aufweist, die zwischen einer Vielzahl von Funkzellen bewegbar sind,
wobei die genannten PSen fähig sind, mit einer ZS zu kommunizieren, die die PSen über Funkverbindungen verwaltet,
wobei jede der genannten ZSen, die eine Vielzahl von Nebenstellen-Telefonnummern verwaltet, eine bestimmte Funkzelle aufweist, die ein Gebiet definiert, das fähig ist, über Funkverbindungen zu kommunizieren, und die jeweils eine der genannten Nebenstellen-Telefonnummem jeder der PSen zuordnet,
**dadurch gekennzeichnet, dass** das System aufweist:
eine Vielzahl von Zellstationen (ZSen), die durch ein lokales Netz miteinander verbunden sind,
wobei jede der genannten PSen einen speziellen Bezeichner des lokalen Netzes aufweist und
die Bezeichner des lokalen Netzes der genannten Vielzahl von PSen registriert, die sich in ihrem Gebiet befinden,
und dadurch, dass das genannte Verfahren die Schritte umfasst des:
(a) als Antwort auf das Bewegen einer ersten PS in das Gebiet einer ersten ZS erfolgenden Registrierens des Bezeichners des lokalen Netzes der genannten ersten PS und des Zuordnens einer Nebenstellen-Nummer zu der genannten ersten PS durch die genannte erste ZS,
(b) Sendens von Anrufinformationen einschließlich eines Bezeichners des lokalen Netzes einer zweiten PS und des erneuten Zuordnens einer Nebenstellen-Telefonnummer zu der genannten ersten PS zu der genannten ersten ZS über Funkverbindungen durch die genannte erste PS,
(c) Sendens der genannten Anrufinformationen von der genannten ersten ZS zu all den anderen ZSen über das genannte lokale Netz durch die genannte erste ZS,
(d) als Antwort auf eine zweite ZS, die die genannte zweite PS registriert, Empfangens der genannten Anrufinformationen und des Zurücksendens von ihnen zu der genannten zweiten PS über Funkverbindungen durch die genannte zweite ZS,
(e) Wählens der Nebenstellen-Telefonnummern, die in den genannten Anrufinformationen gespeichert sind, durch die genannte zweite PS und
(f) Anrufens der genannten ersten PS über eine Nebenstellen-Verbindung als Antwort auf den Wählschritt (e) und des Erstellens einer Nebenstellen-Telefonverbindung zwischen der genannten ersten und zweiten PS.

2. Verfahren nach Anspruch 1, wobei das genannte Verfahren weiter die Schritte umfasst des:
(a) Erstellens einer Nachrichtenverbindung zwischen einer ersten PS innerhalb einer Funkzelle einer ersten ZS und einer zweiten PS innerhalb einer Funkzelle einer zweiten ZS,
(b) Überwachens der Empfangspegel während der Übertragung und des augenblicklichen Trennens der genannten Nachrichtenverbindung, wenn die erste PS sich über die Funkzelle der ersten ZS hinausbewegt und der Empfangspegel der Funkwellen auf oder unter den genannten, vorgegebenen Schwellwert fällt,
(c) Registrierens des Bezeichners des lokalen Netzes der ersten PS in einer dritten ZS und des gleichzeitigen Zuordnens einer Nebenstellen-Telefonnummer zu der ersten PS, wenn die erste PS sich zu der Funkzelle der dritten ZS bewegt,
(d) Sendens von Bewegungsinformationen einschließlich des Bezeichners des lokalen Netzes der zweiten PS und der genannten, jüngst zugeordneten Nebenstellen-Telefonnummer von der ersten PS zu der dritten ZS über Funkverbindungen,
(e) Sendens der genannten Bewegungsinformationen von der dritten ZS zu der zweiten ZS über das lokale Netz,
(f) Sendens der genannten Bewegungsinformationen von der zweiten ZS zu der zweiten PS durch ein Funksignal,
(g) Wählens der Nebenstellen-Telefonnummer, die in den Bewegungsinformationen aus der zweiten PS eingeschlossen ist, und
(h) Anrufens der ersten PS als Anwort auf den genannten Wählschritt und des dann erfolgenden Wiedererstellens der Nebenstellen-Telefonverbindung zwischen der ersten PS und der zweiten PS als Antwort auf das genannte Anrufen.

3. Vorrichtung zur Steuerung eines Sprache und Daten integrierenden Mobilsystems,
wobei das genannte System eine Vielzahl von Zellstationen (ZSen), die über Nebenstellen-Telefonnetze miteinander verbunden sind, und eine Vielzahl von persönlichen Stationen (PSen) aufweist, die zwischen einer Vielzahl von Funkzellen bewegbar sind,
wobei die genannten PSen fähig sind, mit einer ZS zu kommunizieren, die die PSen über Funkverbindungen verwaltet,
wobei jede der genannten ZSen, die eine Vielzahl von Nebenstellen-Telefonnummem verwaltet, eine spezielle Funkzelle aufweist, die ein Gebiet definiert, das fähig ist, über Funkverbindungen zu kommunizieren, und die jeweils eine der genannten Nebenstellen-Telefonnummern jeder der PSen zuordnet,
**dadurch gekennzeichnet, dass** das System aufweist:
eine Vielzahl von Zellstationen (ZSen), die durch ein lokales Netz miteinander verbunden sind,
wobei jede der genannten PSen einen speziellen Bezeichner des lokalen Netzes aufweist und
die Bezeichner der lokalen Netze der genannten Vielzahl von PSen registriert, die sich in ihrem Gebiet befinden,
und dadurch, dass die genannte Vorrichtung umfasst:
(a) Mittel zum Registrieren des Bezeichners des lokalen Netzes
einer ersten PS und zum Zuordnen einer Nebenstellen-Nummer zu der genannten ersten PS durch eine erste ZS als Antwort auf das Bewegen der genannten ersten PS in das Gebiet der genannten ersten ZS,
(b) Mittel zum Senden von Anrufinformationen einschließlich
eines Bezeichners des lokalen Netzes einer zweiten PS und des erneuten Zuordnens einer Nebenstellen-Telefonnummer zu der genannten ersten PS zu der genannten ersten ZS über Funkverbindungen durch die genannte erste PS,
(c) Mittel zum Senden der genannten Anrufinformationen von
der genannten ersten ZS zu all den anderen ZSen über das genannte lokale Netz durch die genannte erste ZS,
(d) Mittel zum Empfangen der genannten Anrufinformationen, zum Zurücksenden von ihnen zu der genannten zweiten PS über Funkverbindungen durch die genannte zweite ZS als Antwort auf eine zweite ZS, die die genannte zweite PS registriert,
(e) Mittel zum Wählen der Nebenstellen-Telefonnummern, die in den genannten Anrufinformationen gespeichert sind, durch die genannte zweite PS und
(f) Mittel zum Anrufen der genannten ersten PS über eine Nebenstellen-Verbindung als Antwort auf das genannte Wählen und zum Erstellen einer Nebenstellen-Telefonverbindung zwischen der genannten ersten und zweiten PS.

4. Vorrichtung nach Anspruch 3, wobei die genannte Vorrichtung weiter umfasst:
(a) Mittel zum Erstellen einer Nachrichtenverbindung zwischen einer ersten PS innerhalb einer Funkzelle einer ersten ZS und einer zweiten PS innerhalb einer Funkzelle einer zweiten ZS,
(b) Mittel zum Überwachen der Empfangspegel während der Übertragung und Mittel zum augenblicklichen Trennen der genannten Nachrichtenverbindung, wenn die erste PS sich über die Funkzelle der ersten ZS hinausbewegt und der Empfangspegel der Funkwellen auf oder unter den genannten vorgegebenen Schwellwert fällt,
(c) Mittel zum Registrieren des Bezeichners des lokalen Netzes der ersten PS in einer dritten ZS und zum gleichzeitigen Zuordnen einer Nebenstellen-Telefonnummer zu der ersten PS, wenn die erste PS sich zu der Funkzelle der dritten ZS bewegt,
(d) Mittel zum Senden von Bewegungsinformationen einschließlich des Bezeichners des lokalen Netzes der zweiten PS und der genannten jüngst zugeordneten Nebenstellen-Telefonnummer von der ersten PS zu der dritten ZS über Funkverbindungen,
(e) Mittel zum Senden der genannten Bewegungsinformationen von der dritten ZS zu der zweiten ZS über das lokale Netz,
(f) Mittel zum Senden der Bewegungsinformationen von der zweiten ZS zu der zweiten PS durch ein Funksignal,
(g) Mittel zum Wählen der Nebenstellen-Telefonnummer, die in den Bewegungsinformationen aus der zweiten PS eingeschlossen sind, und
(h) Mittel zum Anrufen der ersten PS als Antwort auf den genannten Wählschritt und zum dann erfolgenden Wiedererstellen der Nebenstellen-Telefonverbindung zwischen der ersten PS und der zweiten PS als Antwort auf das genannte Anrufen.

## Revendications

1. Un procédé de commande d'un système mobile Intégrant la Voix et les Données (IVD),
ledit système comportant une pluralité de stations cellulaires (CS), interconnectées par des réseaux téléphoniques à central privé PBX, et une pluralité de stations personnelles (PS), déplaçables dans une pluralité de cellules radio,
lesdites PS étant capables de communiquer avec une CS qui gère les PS par des liaisons radio,
chacune desdites CS, gérant une pluralité de numéros de téléphone de central privé PBX, comportant une cellule radio particulière qui définit un territoire capable où l'on peut communiquer par des liaisons radio, et affectant l'un desdits numéros de téléphone de PBX à chacun des PS respectivement,
**caractérisé en ce que** le système comporte :
une pluralité de stations cellulaires (CS) interconnectées par un LAN,
chacun desdits PS comportant un identificateur LAN particulier, et
effectuant l'enregistrement des identificateurs LAN de ladite pluralité de PS qui sont dans son territoire,
et **en ce que** ledit procédé comprend les étapes consistant à :
(a) en réponse au déplacement d'un premier PS dans un territoire d'un premier CS, enregistrer ledit premier identificateur LAN du PS et affecter un numéro PBX audit premier PS par ledit premier CS;
(b) envoyer une information d'appel, incluant un deuxième identificateur LAN de PS et ledit numéro de téléphone PBX nouvellement affecté auxdits premiers PS, audit premier CS, via des liaisons radio par ledit premier PS;
(c) envoyer ladite information d'appel depuis ledit premier CS à la totalité des autres CS, via ledit LAN par ledit premier CS;
(d) en réponse à un second CS, qui enregistre le fait que ledit deuxième PS reçoit ladite information d'appel, réemettre celle-ci audit deuxième PS, via des liaisons radio, par ledit deuxième CS;
(e) faire composer les numéros de téléphone PBX, mémorisés dans ladite information d'appel, par ledit deuxième PS; et
(f) appeler ledit premier PS, via une liaison PBX, en réponse à la composition effectuée à l'étape (e), et établir une liaison téléphone PBX entre lesdits premier et deuxième PS.

2. Un procédé selon la revendication 1, ledit procédé comprenant en outre l'étape consistant à :
(a) établir une liaison de communication, entre un premier PS, dans une cellule radio d'un premier CS, et un deuxième PS, dans une cellule radio d'un deuxième CS,
(b) surveiller les niveaux de réception durant la transmission et déconnection instantanée de ladite liaison de communication si le premier PS sort de la cellule radio du premier CS et si le niveau de réception des ondes radio descend à ou au-dessous de ladite valeur de seuil prédéterminée,
(c) enregistrer l'identificateur LAN du premier PS dans une troisième CS, et affectation simultanée d'un numéro de téléphone PBX au premier PS lorsque le premier PS se déplace à la cellule radio du troisième CS,
(d) envoyer une information de déplacement, incluant l'identificateur LAN du deuxième PS et ledit numéro de téléphone public nouvellement affecté, du premier PS au troisième PS, par des liaisons radio,
(e) envoyer ladite information de déplacement, du troisième CS au deuxième CS via le LAN,
(f) envoyer ladite information de déplacement, du deuxième CS au deuxième PS, par signal radio,
(g) composer le numéro de téléphone PBX inclus dans ladite information de déplacement depuis le deuxième PS, et
(h) appeler le premier PS en réponse à ladite étape de composition de numéro, puis rétablissement de la liaison de téléphone PBX entre le premier PS et le deuxième PS, en réponse audit appel.

3. Un dispositif de commande d'un système mobile Intégrant la Voix et les Données (IVD),
ledit système comportant une pluralité de stations cellulaires (CS) interconnectées par des réseaux téléphoniques à PBX et une pluralité de Stations Personnelles (PS), déplaçables dans une pluralité de cellules radio,
lesdites PS étant susceptibles de communiquer avec une CS qui gère les PS par des liaisons radio,
chacune desdites CS gérant une pluralité de numéros de téléphone PBX, ayant une cellule radio particulière qui définit un territoire capable de faire communiquer par des liaisons radio, et affectant un desdits numéros de téléphone PBX à chacun des PS, respectivement,
**caractérisé en ce que** le système comporte :
une pluralité de stations cellulaires (CS) interconnectées par un LAN,
chacun desdits PS ayant un identificateur LAN particulier,
effectuant l'enregistrement des identificateurs LAN de ladite pluralité de PS qui se trouvent dans son territoire,
et **en ce que** ledit dispositif comprend :
(a) des moyens pour enregistrer un premier identificateur LAN de PS et affecter un numéro PBX audit premier CS par un premier CS, en réponse au déplacement dudit premier PS dans le territoire dudit premier CS;
(b) des moyens pour envoyer une information d'appel, incluant un deuxième identificateur LAN de PS et ledit premier numéro de téléphone PBX nouvellement affecté audit premier PS, audit premier CS, via des liaisons radio, par ledit premier PS;
(c) des moyens pour envoyer ladite information d'appel, dudit premier CS à la totalité des autres CS, via ledit LAN, par ledit premier CS;
(d) des moyens pour recevoir ladite information d'appel, la réémettre audit deuxième PS via des liaisons radio par ledit deuxième CS, en réponse à un deuxième CS qui enregistre ledit deuxième PS;
(e) des moyens pour faire composer les numéros de téléphone PBX, stockés dans ladite information d'appel, par ledit deuxième PS; et
(f) des moyens pour appeler ledit premier PS via une liaison PBX, en réponse à ladite composition de numéro, et pour établir une liaison téléphonique PBX entre lesdits premier et deuxième PS.

4. Un dispositif selon la revendication 3, ledit dispsotif comprenant en outre :
(a) des moyens pour établir une liaison de communication entre un premier PS, situé dans une cellule radio d'un premier CS, et un deuxième PS, situé dans une cellule radio d'un deuxième CS;
(b) des moyens pour surveiller les niveaux de réception durant la transmission et des moyens pour déconnecter instantanément de ladite liaison de communication, si le premier PS sort de la cellule radio du premier CS et si le niveau de réception des ondes radion descend jusqu'à ou au-dessous de ladite valeur de seuil prédéterminée,
(c) des moyens pour enregistrer l'identificateur LAN du premier PS dans un troisième CS et affecter simultanément un numéro de téléphone PBX au premier PS, lorsque le premier PS se déplace à la cellule radio du troisème CS,
(d) des moyens pour envoyer l'information de déplacement, incluant l'identificateur LAN du deuxième PS et ledit numéro de téléphone PBX nouvellement affecté, du premier PS au troisième CS, par des liaisons radio,
(e) des moyens, pour envoyer ladite information de déplacement du troisième CS au deuxième CS, via le LAN,
(f) des moyens, pour envoyer ladite information de déplacement du deuxième CS au deuxième PS, par signal radio,
(g) des moyens pour composer le numéro de téléphone TDX inclus dans ladite information de déplacement, depuis le deuxième PS, et
(h) des moyens pour appeler le premier PS en réponse à ladite étape de composition de numéro, puis rétablir la liaison téléphonique PBX entre le premier PS et le deuxième PS, en réponse dudit appel.
